# EUROPEAN PATENT APPLICATION

(11) **EP 4 822 822 A1**
(43) Date of publication of application: **14.10.2026**
(21) Application number: 26151172.9
(22) Date of filing: 09.01.2026
(51) Int. Cl.: H01M 10/613, H01M 10/647, H01M 10/6556, H01M 10/6557, H01M 10/6567, H01M 50/209, H01M 50/30, H01M 50/358

(54) **BATTERY PACK**

(30) Priority: 10.04.2025 KR 20250046686
(71) Applicant: SAMSUNG SDI CO., LTD., Yongin-si, Gyeonggi-do 17084 (KR)
(72) Inventor: CHOI, Han Young, 16678 Suwon-si (KR)
(74) Representative: Marks & Clerk LLP

(57) **Abstract**

The present disclosure relates to a battery pack, and the technical problem is to prevent thermal runaway from spreading to adjacent battery cells or blocking a vent path and/or a pack vent in the event of thermal runaway in the battery cell. The battery pack according to embodiments includes a housing having a pack vent, a plurality of battery cells accommodated within the housing and arranged side by side such that cell vents thereof are directed in the same direction, a vent path communicating with the pack vent and the cell vent of each of the plurality of battery cells as an empty space between the plurality of battery cells and the housing, and a cooling member including a pipe disposed in contact with the plurality of battery cells and the vent path within the housing and formed of a material that is melted by gas discharged from the cell vent.

## Description

### FIELD

The present disclosure relates to a battery pack including a plurality of battery cells.

### BACKGROUND

Secondary batteries are batteries that can be charged and discharged, unlike primary batteries that cannot be recharged. Low-capacity secondary batteries are used in small portable electronic devices such as smartphones, feature phones, notebook computers, digital cameras, and camcorders, and high-capacity batteries are widely used as power sources for driving a motor, power storage batteries, and the like in hybrid vehicles, electric vehicles, and the like. Such a battery includes electrodes including a positive electrode and/or a negative electrode, an electrode assembly including the electrodes, a case which accommodates the electrode assembly, electrode terminals connected to the electrode assembly, etc.

As technology advances, high-capacity batteries are required. Accordingly, a plurality of batteries can be used by being electrically connected. For example, the battery may be applied to an electronic device in the form of a battery module including a plurality of batteries (hereinafter referred to as "battery cells"), and/or a battery pack including a plurality of battery modules. In some embodiments, the battery pack may be formed using a plurality of batteries. In this case, the electronic device is an electronic device requiring high output and/or high capacity and includes, for example, electric vehicles and the like.

The battery cell may undergo thermal runaway due to electrical or physical shock during charging and discharging and the thermal runaway may result in a fire or explosion. In a battery pack in which a plurality of battery cells are arranged adjacently, when a thermal runaway phenomenon occurs in one of the battery cells, it is easy for it to spread to the surrounding battery cells. In order to prevent the battery cell from exploding, the battery cell is provided with a cell vent through which flames and gas are discharged to the outside. Also, the battery pack is provided with a pack vent through which flames or gas discharged through the cell vent are discharged to the outside of the battery pack, and a vent path that is a preset path along which flames or gas is guided and discharged to the outside is set between the cell vent and the pack vent.

The herein-described information disclosed in the background technology of this disclosure is only intended to improve understanding of the background of the present disclosure and therefore may include information that does not constitute related art.

### SUMMARY

The present disclosure is directed to providing a battery pack capable of blocking thermal runaway from spreading to an adjacent battery cell when a thermal runaway phenomenon occurs in a battery cell.

The present disclosure is also directed to providing a battery pack capable of preventing a vent path and/or a pack vent from being blocked when a thermal runaway phenomenon occurs in a battery cell.

However, technical problems to be solved by the present disclosure are not limited to the problems described herein, and other problems that are not described may be clearly understood by those skilled in the art from the description of the disclosure described herein.

According to aspects of the present disclosure, there is provided a battery pack comprising: a housing having a pack vent; a plurality of battery cells accommodated within the housing and arranged side by side such that respective cell vents thereof are directed in the same direction; a vent path communicating with the pack vent and the cell vent of each of the plurality of battery cells as an empty space between the plurality of battery cells and the housing; and a cooling member including a pipe disposed in contact with the plurality of battery cells and the vent path within the housing and at least partially formed of a material that is melted by gas discharged from the cell vent.

According to embodiments of the present disclosure, the cooling member may further include a coolant flowing inside the pipe.

Also, at least a portion of the pipe, which is in contact with the vent path, may be formed of a material having a melting point ranging from 100 to 700 °C.

Also, the material may include one or more of a polymer resin and aluminum.

Also, the pipe may be formed entirely of a material with a melting point ranging from 100 to 700 °C.

Also, the coolant may include one or more of water and ethylene glycol.

Also, the cell vent may be provided on a lower surface of the battery cell, which is a prismatic battery, and an electrode terminal of the battery cell may be provided on an upper surface or a side surface of the battery cell.

According to aspects of the present disclosure, there is provided a battery pack including: a housing having a pack vent; a plurality of prismatic battery cells accommodated within the housing and each having a cell vent provided on a lower surface thereof; a vent path communicating with the pack vent and the cell vent of each of the plurality of prismatic battery cells as an empty space between the plurality of prismatic battery cells and a first plate of the housing; and a cooling member including a pipe disposed in contact with the lower surface of each of the plurality of prismatic battery cells and the vent path within the housing and at least partially formed of a material that is melted by gas discharged from the cell vent.

According to aspects of embodiments, the cell vent may be provided in a central portion of the lower surface of each of the plurality of prismatic battery cells, and the cooling member may be disposed in contact with both side portions of the lower surface of each of the plurality of prismatic battery cells.

Also, the battery pack may further include a support member that is disposed on an upper side of the first plate of the housing and supports the plurality of prismatic battery cells upwardly.

Also, the support member may be disposed on a lower side of the cooling member to support the cooling member upwardly.

Also, the cooling member may further include a coolant flowing inside the pipe.

Also, at least a portion of the pipe, which is in contact with the vent path, may be formed of a material having a melting point ranging from 100 to 700 °C.

Also, the material may include one or more of a polymer resin and aluminum.

Also, the pipe may be formed entirely of a material with a melting point ranging from 100 to 700 °C.

Also, the coolant may include one or more of water and ethylene glycol.

Also, an electrode terminal of each of the plurality of prismatic battery cells may be provided on a different side from the cell vent.

Also, the electrode terminal of prismatic battery cell of the plurality prismatic battery cells may be provided on an upper surface or a side surface of the each prismatic battery cell.

According to aspects of the present disclosure, there is provided a battery pack including: a housing having a rectangular parallelepiped shape with a pack vent defined between a first plate and a second plate intersecting each other; a plurality of prismatic battery cells arranged side by side in a front-to-rear direction inside the housing and each having a cell vent in a central portion of the lower surface thereof; a vent path communicating with the pack vent and the cell vent of each of the plurality of prismatic battery cells as an empty space between the plurality of prismatic battery cells and the first plate; a pair of cooling members including pipes installed between a third plate opposite to the second plate and the second plate of the housing so as to be in contact with both side portions of the lower surface of each of the plurality of prismatic battery cells and the vent path within the housing and at least partially formed of a material that is melted by gas discharged from the cell vent; and a plurality of support members that are disposed on an upper side of the first plate and supports the pair of cooling members upwardly.

According to aspects of embodiments, the pair of cooling members may further include a coolant flowing inside the pipe.

At least some of the above and other features of the invention are set out in the claims.

### BRIEF DESCRIPTION OF THE DRAWINGS

The following drawings attached to the present specification illustrate example embodiments of the present disclosure and further describe aspects and features of the present disclosure together with the detailed description of the present disclosure. Thus, the present disclosure should not be construed as being limited to the drawings, in which:
FIG. 1 is a perspective view schematically illustrating an exterior of a battery pack according to embodiments;
FIG. 2 is an exploded perspective view of the battery pack of FIG. 1;
FIG. 3 is a perspective view of an interior of a housing of the battery pack of FIG. 1 from the upper left;
FIG. 4 is a perspective view of the interior of the housing of the battery pack of FIG. 1 from the lower left;
FIG. 5 is a schematic front view of the battery pack of FIG. 1 from which a front plate of the housing is removed; and
FIG. 6 is a perspective view schematically illustrating a cooling member according to embodiments.

### DETAILED DESCRIPTION

Hereinafter, example embodiments of the present disclosure will be described in detail with reference to the attached drawings. Prior to this, terms or words used in this specification and claims should not be interpreted limited to ordinary or dictionary meanings and should be interpreted as meanings and concepts consistent with the technical idea of this disclosure based on the principle that the inventor can properly define the concept of the term in order to describe his or her disclosure in the best way. Accordingly, it is to be understood that the embodiments described herein, and the configurations illustrated in the drawings are only some example embodiments of the disclosure and do not represent all of the technical ideas of the disclosure, and that there may be various equivalents and modifications that may replace them at the time of filing.

Furthermore, when used herein, the terms "comprise or include" and/or "comprising or including" specify the presence of the described shapes, numbers, steps, operations, members, elements, and/or groups thereof and are not intended to exclude the presence or addition of one or more other shapes, numbers, operations, members, elements, and/or groups thereof.

In addition, in order to help understand the disclosure, the attached drawings are not drawn to actual scale, and the dimensions of some components may be exaggerated. In addition, the same reference numbers may be assigned to the same components in different embodiments.

The statement that two objects for comparison are "equal" means "substantially the same." Therefore, substantially the same may include deviations that are considered low in the art, for example, deviations of less than 5%. Additionally, uniformity of a parameter over a given region may mean uniformity from an average perspective.

Although first, second, and the like are used to describe various components, the components are not limited by these terms. These terms are used only to distinguish one component from another, and unless otherwise specifically stated, it is to be understood that a first component may also be a second component.

Throughout the specification, unless otherwise specifically stated, each element may be singular or plural.

When an arbitrary component is disposed "on (or under)" a first component or "above (or below)" the first component, it can mean not only that the arbitrary component is disposed in contact with the top (or bottom) of the first component, but also that a second component can be interposed between the first component and the arbitrary component disposed on (or under) the first component.

In addition, when a component is described as being "on," "connected to," or "coupled to" in another component, the components may be directly connected or coupled to each other, but it should be understood that still another component may be "interposed" between the components, or each component may be "connected," "coupled," or "linked" through still another component.

As used herein, the term "and/or" includes any and all combinations of one or more of the associated listed items. Further, the use of "may" when describing embodiments of the present disclosure is directed to "one or more embodiments of the present disclosure." Expressions such as "one or more" and "at least one" before the list of elements modify the entire list of elements and do not modify individual elements in the list.

Throughout the specification, "A and/or B" means A, B, or A and B unless otherwise stated to the contrary. That is, "and/or" includes any or all combinations of a plurality of listed items. When "C to D" is stated, it means greater than or equal to C and less than or equal to D unless otherwise specifically stated.

When phrases such as "at least one of A, B, and C," "at least one of A, B, or C," "at least one selected from group of A, B, and C," or "at least one selected from A, B, and C" are used to specify a list of elements A, B, and C, the phrases may refer to any and all suitable combinations.

The term "use" may be considered synonymous with the term "utilize." As used in the present specification, the terms "substantially," "about," and other similar terms are used as terms of approximation rather than terms of degree, and are intended to consider an inherent variation in measured or calculated values recognized by those skilled in the art.

It will be understood that, although the terms first, second, third, etc., may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be named a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the device in use or operation in addition to the orientation depicted in the drawings. For example, when the elements or features in the drawings are inverted, an element described as "lower" or "below" "becomes "upper" or "above."

The terms used in the present specification are intended to describe the embodiments of the present disclosure and are not intended to limit the present disclosure.

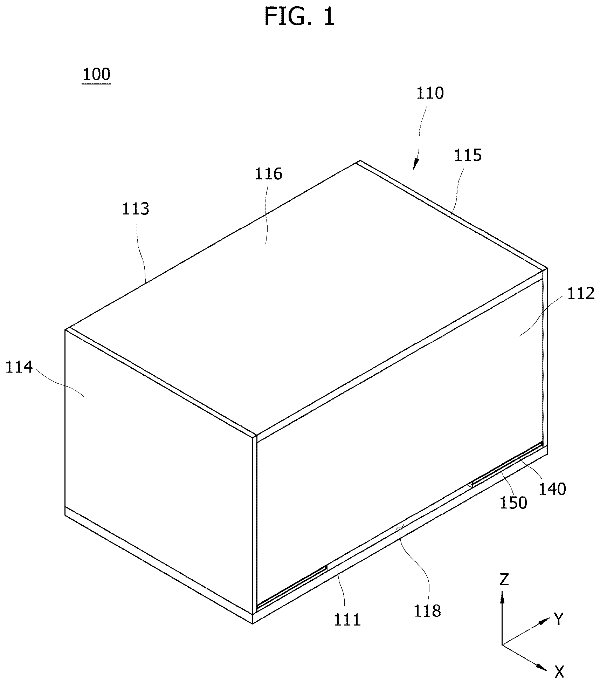

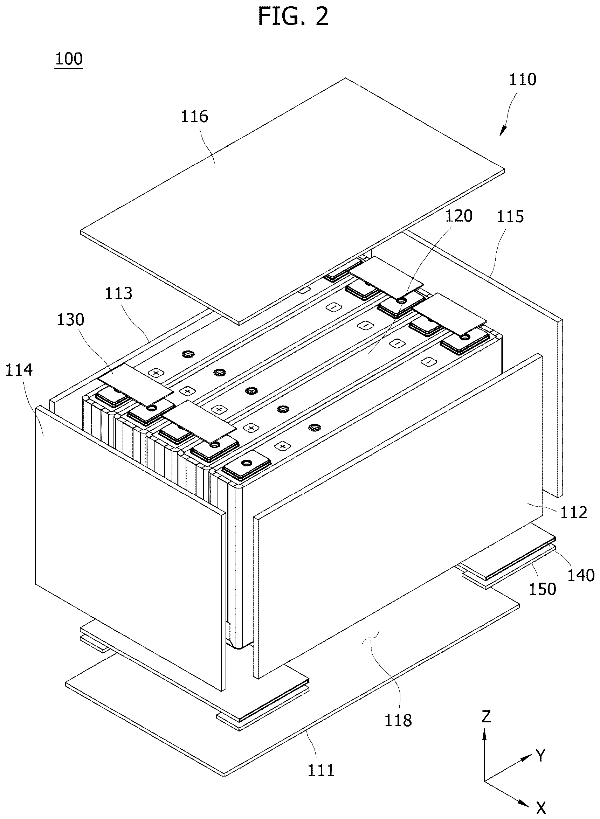

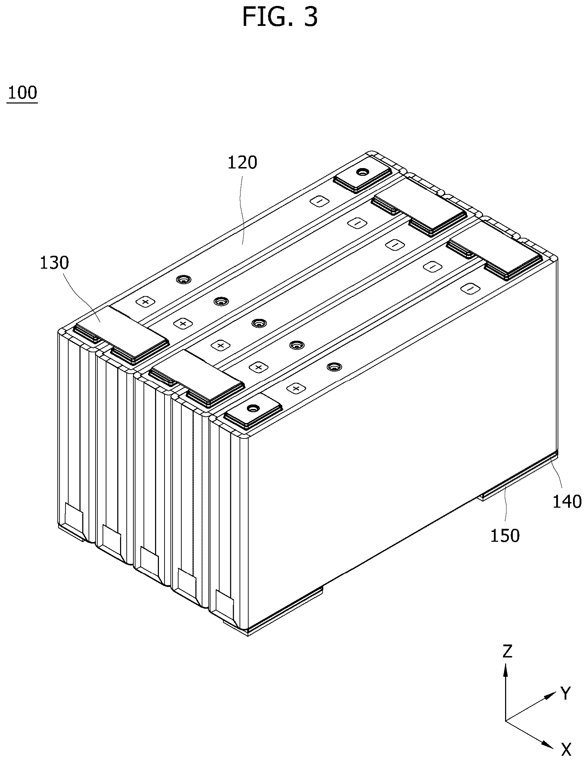

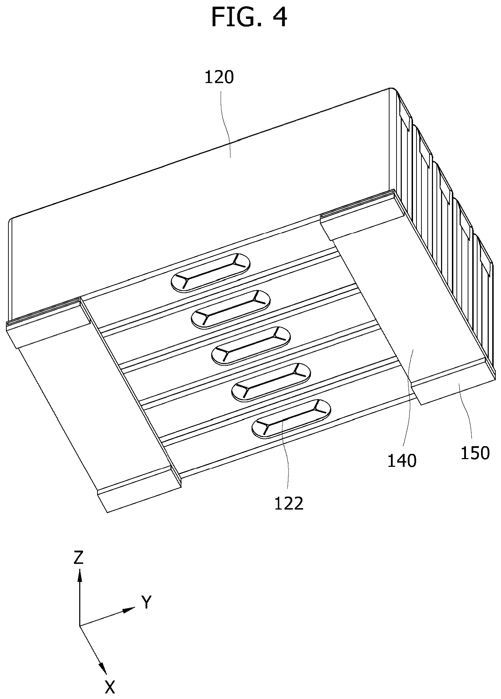

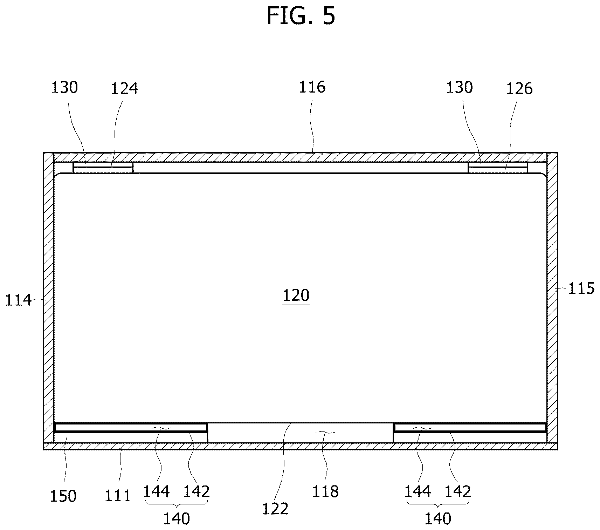

FIG. 1 is a perspective view schematically illustrating an exterior of a battery pack according to embodiments, FIG. 2 is an exploded perspective view of the battery pack of FIG. 1, FIG. 3 is a perspective view of an interior of a housing of the battery pack of FIG. 1 from the upper left, FIG. 4 is a perspective view of the interior of the housing of the battery pack of FIG. 1 from the lower left, and FIG. 5 is a schematic front view of the battery pack of FIG. 1 from which a front plate of the housing is removed.

Referring to FIGS. 1 to 5, a battery pack 100 may include a housing 110, a plurality of battery cells 120, a busbar 130, and a cooling member 140. The battery pack 100 may further include a support member 150.

The housing 110 may form an approximate exterior of the battery pack and provide a space in which the plurality of battery cells 120 may be accommodated. The housing 110 may have an empty interior to accommodate the plurality of battery cells 120 and have an overall rectangular parallelepiped shape. However, it is not limited thereto, and the housing 110 may have a shape other than a rectangular parallelepiped as long as it can accommodate the plurality of battery cells 120.

For example, the rectangular-parallelepiped shaped housing 110 may include first to sixth plates 111 to 116. The thickness, shape, size, etc., of each of the first to sixth plates 111 to 116 of the housing 110 illustrated in the drawing are arbitrary and may vary depending on the thickness, shape, size, etc., of components accommodated therein, such as the plurality of battery cells 120, the busbar 130, the cooling member 140, and/or the support member 150.

The first plate 111 may be disposed at a lower side of the housing 110 in a Z-axis direction. The first plate 111 may correspond to a lower surface forming an exterior of the lower side of the housing 110. The first plate 111 may have the form of a rectangular plate.

The second plate 112 and the third plate 113 may be disposed on both ends of the housing 110 in an X-axis direction. The second plate 112 may correspond to a front surface forming an exterior of a front side of the housing 110, and the third plate 113 may correspond to a rear surface forming an exterior of a rear side of the housing 110. The second plate 112 and the third plate 113 may each have the form of a rectangular plate.

Also, the fourth plate 114 and the fifth plate 115 may be disposed on both ends of the housing 110 in a Y-axis direction. The fourth plate 114 and the fifth plate 115 may respectively correspond to a left side surface and a right side surface when viewed from the front plate of the housing 110, that is, the second plate 112. The fourth plate 114 and the fifth plate 115 may also each have the form of a rectangular plate.

The second plate 112, the third plate 113, the fourth plate 114 and the fifth plate 115 may form an exterior of an outer surface of the housing 110. The second plate 112, the third plate 113, the fourth plate 114 and the fifth plate 115 may have the form of plates extending in the Z-axis direction, for example, upward, from an edge of the first plate 111. The second plate 112, the third plate 113, the fourth plate 114 and the fifth plate 115 may be disposed to surround a space above the first plate 111. The second plate 112, the third plate 113, the fourth plate 114 and the fifth plate 115 may be disposed to form a rectangular cross-sectional shape taken perpendicular to the Z-axis direction.

The second plate 112 and the third plate 113 may be disposed to face each other in a longitudinal direction (the X-axis direction) of the housing 110. The second plate 112 and the third plate 113 may be disposed parallel to each other. Areas of the second plate 112 and the third plate 113 may be the same. The second plate 112 and the third plate 113 are disposed at both ends of the plurality of battery cells 120 in an arrangement direction (the X-axis direction) of battery cells so as to come into surface contact with the outermost battery cells 120, thereby applying inward pressure to the plurality of battery cells 120. Thus, the second plate 112 and the third plate 113 may be thicker than other plate members, such as the fourth plate 114, the fifth plate 115, and the sixth plate 116.

The fourth plate 114 and the fifth plate 115 may be disposed to face each other in a width direction (the Y-axis direction) of the housing 110. The fourth plate 114 and the fifth plate 115 may be disposed parallel to each other. Areas of the fourth plate 114 and the fifth plate 115 may be the same. The areas of the fourth plate 114 and the fifth plate 115 may be smaller than the area of the second plate 112 or the third plate 113.

The sixth plate 116 may be coupled to an upper end of each of the second plate 112, the third plate 113, the fourth plate 114, and the fifth plate 115. The sixth plate 116 may be disposed to face the first plate 111 in a vertical direction (the Z-axis direction) of the housing 110. The sixth plate 116 may be disposed parallel to the first plate 111. An area of the sixth plate 116 may be the same as an area of the first plate 111.

The housing 110 may be provided with a pack vent 118. The pack vent 118 is for discharging gas or the like filled inside the housing 110 to the outside of the housing 110 when gas, or the like is discharged from a cell vent 122 of the battery cell 120 due to thermal runaway or the like. Thus, the pack vent 118 may be provided at one or more sides of the housing 110. The pack vent 118 may be designed to have a relatively weaker strength than other surrounding parts and may have the function of discharging high-pressure gas or the like.

Alternatively, the pack vent 118 may be in the form of an opening provided at one side of the housing 110. For example, the pack vent 118 may be an opening of a predetermined size formed at a portion of the housing 110 close to the cell vent 122, such as the first plate 111, or a portion of the second plate 112 or the third plate 113 adjacent to the first plate 111. Alternatively, the pack vent 118 may correspond to a space between the first plate 111 and the second plate 112, which are installed to be spaced a predetermined interval from each other, as illustrated in FIG. 1. In this case, the pack vent 118 may be a portion of the space between the first plate 111 and the second plate 112 other than the portion blocked by the cooling member 140 and the support member 150.

As the pack vent 118 is provided in the housing 110, gas or the like discharged from the cell vent 122 may be discharged to the outside of the housing 110 through the pack vent 118. Accordingly, in the empty space inside the housing 110, a path along which gas or the like is discharged, that is, a vent path, may be formed between the cell vent 122 of each of the plurality of battery cells 120 and the pack vent 118. That is, gas or the like discharged from the cell vent 122 may flow along the vent path and may be discharged to the outside of the housing 110 through the pack vent 118.

For example, the battery pack 100 may have a separate structure that allows gas or the like discharged from the cell vent 122 to flow along the vent path toward the pack vent 118. This structure may be provided in the cell vent 122 or may be additionally installed in contact with the cell vent 122. Accordingly, high temperature gas or the like discharged from the cell vent 122 may be guided toward the pack vent 118 by the above structure and discharged to the outside of the housing 110 through the pack vent 118.

The battery cell 120 may function as a unit structure that stores and supplies power in the battery pack 100. Hereinafter, the battery cell 120 is described as an example of a lithium-ion secondary battery having a hexahedral prismatic shape. However, the present disclosure is not limited thereto, and the battery cell 120 may be a lithium-polymer battery or a cylindrical battery.

The battery cell 120 may include an electrode assembly having a separator interposed between a positive electrode and a negative electrode, and a cell case in which the electrode assembly is accommodated inside. The positive electrode, the negative electrode, and the separator may be impregnated with an electrolyte. The battery cell 120 may include electrode tabs and electrode terminals, i.e., a positive electrode tab and a negative electrode tab, and a positive electrode terminal and a negative electrode terminal, which function as electrical paths for conducting current formed in the electrode assembly to the outside.

### Positive electrode

The positive electrode of the battery cell 120 may include a current collector (substrate) and a positive electrode active material layer (a positive electrode mixture layer) formed on a current collector. The positive electrode active material layer includes a positive electrode active material and may further include a binder and/or a conductive material. For example, the positive electrode may further include an additive that may function as a sacrificial positive electrode.

As the positive electrode active material, a compound capable of reversible intercalation and deintercalation of lithium (lithiated intercalation compound) may be used. Specifically, at least one composite oxide of lithium and a metal selected from cobalt, manganese, nickel, and a combination thereof may be used.

The composite oxide may be a lithium transition metal composite oxide, and specific examples thereof may include lithium nickel-based oxides, lithium cobalt-based oxides, lithium manganese-based oxides, lithium iron phosphate-based compounds, cobalt-free nickel-manganese-based oxides, or a combination thereof.

For example, a compound represented as any one of chemical formulas herein may be used as the lithium transition metal composite oxide: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the herein chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L1 is Mn, Al, or a combination thereof.

As an example, the positive electrode active material may be a high nickel-based positive electrode active material with a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material can realize high capacity and thus may be applied to high capacity, high density lithium batteries.

The content of the positive electrode active material may be 90 wt% to 99.5 wt% based on 100 wt% of the positive electrode active material layer, and the content of each of the binder and the conductive material may be 0.5 wt% to 5 wt% based on 100 wt% of the positive electrode active material layer.

The binder serves to attach particles constituting the positive electrode active material to each other well and also to attach the positive electrode active material to the current collector well. Representative examples of the binder may include polyvinyl alcohol, carboxymethylcellulose, hydroxypropyl cellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, nylon, and the like, but are not limited thereto.

The conductive material is used to impart conductivity to the electrode, and any material which does not cause a chemical change and is electronically conductive may be used as the positive conductive material. Examples of the conductive material may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer such as a polyphenylene derivative; or a mixture thereof.

Al foil may be used as the current collector plate, but the present disclosure is not limited thereto.

### Negative electrode

The negative electrode of the battery cell 120 includes a current collector (substrate), and a negative electrode active material layer (a negative electrode mixture layer) positioned on the current collector. The negative electrode active material layer includes a negative electrode active material and may further include a binder and/or a conductive material.

The negative electrode active material may include a material capable of reversibly intercalating and deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

A Si-based negative electrode active material or Sn-based negative electrode active material may be used as the material capable of doping and dedoping lithium. The Si-based negative electrode active material may include silicon, a silicon-carbon composite, SiOₓ (0<x<2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or Sn-based negative electrode active material may be used in combination with the carbon-based negative electrode active material. For example, the negative electrode active material layer may include 90 to 99.5 wt% of the negative electrode active material, 0.5 to 5 wt% of the binder, and 0 to 5 wt% of the conductive material.

The binder serves to attach particles constituting the negative electrode active material to each other well, and also to attach the negative electrode active material to the current collector well. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(metha)acrylonitrile, an ethylene propylene diene copolymer, polyvinylpyridine, chlorosulfonated polyethylene, latex, polyester resin, (metha)acrylic resin, phenolic resin, epoxy resin, polyvinyl alcohol, and a combination thereof.

When the aqueous binder is used as the negative electrode binder, a cellulose-based compound capable of imparting viscosity may be further included. This cellulose-based compound may be used by mixing one or more of carboxymethyl cellulose, hydroxypropyl methyl cellulose, methyl cellulose, and alkali metal salts thereof. Na, K, or Li may be used as the alkali metal.

The dry binder is a polymer material capable of being fiberized and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material which does not cause a chemical change and is electronically conductive may be used as the negative conductive material. Specific examples may include a carbon-based material such as natural graphite, artificial graphite, carbon black, acetylene black, Ketjen black, carbon fibers, carbon nanofibers, or carbon nanotubes; a metal-based material in the form of a metal powder or metal fibers containing copper, nickel, aluminum, silver, etc.; a conductive polymer such as a polyphenylene derivative; or a mixture thereof.

The negative current collector (substrate) may be selected from copper foil, nickel foil, stainless steel foil, titanium foil, nickel foam, copper foam, a polymer substrate coated with a conductive metal, and a combination thereof.

### Electrolyte

The electrolyte of the battery cell 120 contains a non-aqueous organic solvent and a lithium salt.

The non-aqueous organic solvent acts as a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

Examples of the carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

Examples of the ether-based solvent may include dibutyl ether, tetraglyme, diglyme, dimethoxyethane, 2-methyltetrahydrofuran, 2,5-dimethyltetrahydrofuran, and tetrahydrofuran. In addition, cyclohexanone and the like may be used as the ketone-based solvent. As the alcohol-based solvent, ethyl alcohol, isopropyl alcohol, and the like may be used, and as the aprotic solvent, a nitrile such as R-CN (R is a straight, branched, or ring-shaped hydrocarbon group having 2 to 20 carbon atoms, and may include a double bond, an aromatic ring, or an ether group), an amide such as dimethylformamide, a dioxolane such as 1,3-dioxolane or 1,4-dioxolane, a sulfolane, and the like may be used.

The non-aqueous organic solvent may be used alone or in a mixture of two or more.

In addition, when using the carbonate-based solvent, a cyclic carbonate and a chain carbonate may be mixed and used, and the cyclic carbonate and the chain carbonate may be mixed in a volume ratio of 1:1 to 1:9.

The lithium salt is a substance that is dissolved in the organic solvent and acts as a source of lithium ions within the battery, enabling the basic operation of the lithium battery and promoting the movement of lithium ions between the positive electrode and the negative electrode. Representative examples of the lithium salt may include one or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

### Separator

Depending on the type of battery cell 120, a separator may be present between the positive electrode and the negative electrode. As the separator, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may also be used.

The separator may include a porous substrate and a coating layer containing an organic material, an inorganic material, or a combination thereof located on one or both sides of the porous substrate.

The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth) acryl-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in a single coating layer or may be present in a form in which a coating layer including an organic material and a coating layer including an inorganic material are stacked.

Referring to FIGS. 1 to 5, the battery cell 120 may include the cell vent 122. The cell vent 122 may be designed, for example, to have relatively weak strength, and configured to rupture or break to release gas or the like to the outside when the internal pressure of the battery cell 120 increases due to thermal runaway or the like.

The cell vent 122 may be disposed at one side of the battery cell 120. For example, in the battery cell 120 having a hexahedral shape, the cell vent 122 may be disposed on a lower surface of the battery cell 120. More specifically, as illustrated in FIG. 3, the cell vent 122 may be disposed in a central portion of the lower surface along a height direction (Z-axis direction) of the battery cell 120. Alternatively, the cell vent 122 may be disposed on a side portion of the lower surface of the battery cell 120. In this way, when the cell vent 122 is disposed on the lower surface of the battery cell 120, as described herein, even when a pipe of the cooling member 140 melts in a high temperature environment and a coolant leaks, the coolant may be suppressed or prevented from flooding or permeating the electrode assembly or the electrode terminals 124 and 126. However, the present disclosure is not limited thereto, and the cell vent 122 may be disposed on another surface of the battery cell 120, such as an upper surface or a side surface of the battery cell 120.

The battery cell 120 may further include a pair of electrode terminals 124 and 126. The pair of electrode terminals 124 and 126 may include a first electrode terminal 124 and a second electrode terminal 126 having different polarities. There are no special restrictions on the size or shape of the first and second electrode terminals 124 and 126.

The electrode terminals 124 and 126 may be disposed at a different side of a prismatic battery cell 120 from the cell vent 122. Accordingly, as described herein, even when the pipe of the cooling member 140 melts in a high-temperature environment and the coolant leaks, the electrode terminals 124 and 126 may be prevented from being damaged by the coolant or from coming into contact with the coolant and short-circuiting the battery cell 120. For example, when the cell vent 122 is disposed on a lower surface of the prismatic battery cell 120, the electrode terminals 124 and 126 may be disposed on an upper surface of the prismatic battery cell 120, or the electrode terminals 124 and 126 may be disposed on two side surfaces of the prismatic battery cell 120, respectively.

The plurality of battery cells 120 may be arranged in a row. For example, the battery pack 100 may include the plurality of battery cells 120 arranged in one direction (the X-axis direction). The plurality of battery cells 120 arranged in one direction may be disposed within the housing 110. Also, as described herein, the cell vent 122 may be disposed on the lower surface of each of the plurality of battery cells 120, and the pair of electrode terminals 124 and 126 may be disposed on the upper surface thereof.

A plurality of battery cells 120 may be electrically connected by the busbar 130. The busbar 130 may be disposed between a sixth plate 116 and the battery cell 120. The busbar 130 may be provided as a plurality of busbars. Each of the busbars 130 may connect a pair of adjacent battery cells 120 in series or in parallel.

As an example, both ends of the busbar 130 may be connected to the first electrode terminal 124 of one of the pair of adjacent battery cells 120 and the second electrode terminal 126 of the other. Accordingly, the plurality of battery cells 120 may be connected in series by the busbar 130. However, the busbar 130 is not limited to this connection form, and both ends thereof may be connected to the first electrode terminal 124 of one of the pair of adjacent battery cells 120 and the first electrode terminal 124 of the other, or to the second electrode terminal 126 of one of the pair of adjacent battery cells 120 and the second electrode terminal 126 of the other.

The busbar 130 may be formed of an electrically conductive material such as copper, aluminum, or nickel, or the like. The specific shape of the busbar 130 is not limited to that shown in FIG. 2, and the design thereof may be changed to various shapes that may electrically connect adjacent battery cells 120.

The plurality of busbars 130 may be supported within the housing 110 by a busbar holder (not shown). The busbar holder may be formed to have the form of a plate. The busbar holder may be disposed between the sixth plate 116 and the battery cell 120. The busbar 130 may be fixed to the busbar holder by various types of joining methods such as fitting, bolting, injection-joining, etc. The busbar holder may include an electrically insulating polymer compound material.

The cooling member 140 is for cooling the battery cell 120 that generates heat during the charging and discharging process. Thus, the cooling member 140 may be disposed in contact with one side of the plurality of battery cells 120 that are disposed in one direction. For example, the cooling member 140 may be disposed in contact with the lower surface along the height direction (Z-axis direction) of the plurality of battery cells 120. However, it is not limited thereto and the cooling member 140 may be disposed in contact with another surface of the battery cell 120 or with two intersecting surfaces as long as the conditions described herein are satisfied.

The cooling member 140 may be disposed in contact with the plurality of battery cells 120 over as large an area as possible. For example, when the cell vent 122 is disposed in a central portion of the lower surface of the battery cell 120, the cooling member 140 may be installed in contact with the battery cells 120 as widely as possible from both sides of the lower surface of the battery cell 120. However, it is not limited thereto, and the cooling member 140 may be disposed at an appropriate position considering the cooling effect on the plurality of battery cells 120.

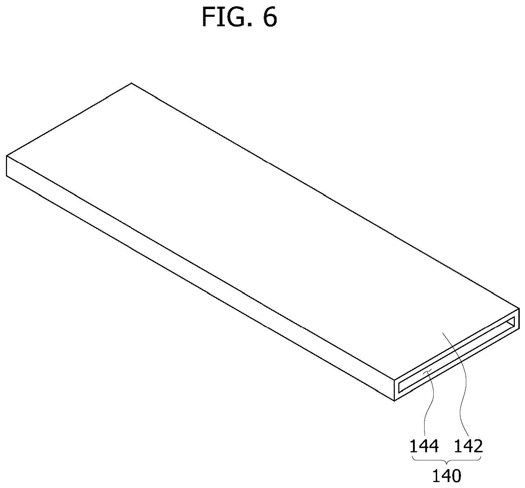

FIG. 6 is a perspective view schematically illustrating a cooling member according to embodiments. Referring to FIG. 6, the cooling member 140 may include a pipe 142 having a predetermined shape and the coolant 144 flowing inside the pipe 142. The cooling member 140 maintains an overall low temperature while the coolant 144, which has a relatively low temperature and a large heat capacity, remains inside or circulates through the pipe 142 and may suppress an increase in the temperature of the battery cell 120 through contact with the battery cell 120.

To this end, the cooling member 140 may perform heat exchange with a predetermined heat exchange system installed outside the battery pack 100 or maintain a relatively low temperature while the coolant 144 passes through the heat exchange system. Also, in the latter case, although not shown in the drawing, an inlet pipe and an outlet pipe for inflow and outflow of the coolant to/from the heat exchange system may be connected to each end of the pipe 142.

The pipe 142 may have the form of a tube with an empty interior to define a space filled with the coolant 144 or a path along which the coolant 144 flows. Also, a cross section of the pipe 142 may have a rectangular shape in which a length of the long side is significantly greater than a length of the short side. Accordingly, by having the long side portion of the pipe 142 in contact with the battery cell 120, the cooling member 140 may be in contact with the battery cell 120 over as wide an area as possible. Additionally, by making the short side portion of the pipe 142 as short as possible, an increase in a height of the housing 110, that is, a size of the battery pack 100, may be suppressed.

In the case in which the cell vent 122 is disposed in a central portion of the lower surface of the prismatic battery cell 120, the cooling member 140 may be disposed such that the long side portion of the pipe 142 having a rectangular cross section shape is in contact with both sides of the prismatic battery cell 120. However, in this case, it is obvious that the pipe 142 of the cooling member 140 should be disposed to not block the cell vent 122. Thus, the cooling member 140 may be in contact with the battery cell 120 over the widest possible area.

The pipe 142 may be formed of a material having good heat transfer characteristics, taking into account the function of the cooling member 140. Also, the pipe 142 may be formed of a material that can be melted in a high-temperature environment, as described hereinafter. That is, the pipe 142 may be formed of a material that can be melted by exhaust gas, flames, or the like when it comes into contact with gas discharged from the cell vent 122 due to thermal runaway of the battery cell 120.

More specifically, the pipe 142 may be formed of a material having a melting point ranging from of 100 to 700 °C. Accordingly, when the pipe 142 comes into contact with gas or flames discharged from the cell vent 122, the pipe 142 may melt. For example, the pipe 142 may be formed of a polymer resin such as polypropylene or a metal having a relatively low melting point such as aluminum.

The pipe 142 of such a material may be disposed inside the housing 110 such that at least a portion thereof is in contact with a vent path. That is, the cooling member 140 may be disposed such that at least a portion of the cooling member 140, that is, the pipe 142, is exposed to the vent path, which is an empty space inside the housing 110 connecting the cell vent 122 and the pack vent 118. Also, of the pipe 142, the portion exposed to the vent path, may be formed of the aforementioned polymer resin or aluminum. Alternatively, the pipe 142 may be formed entirely of the polymer resin or aluminum.

Accordingly, high temperature gas or the like discharged from the cell vent 122 and passing through the vent path may come into contact with the exposed portion of the pipe 142 formed of a polymer resin or aluminum. Also, the exposed portion of the pipe 142 may be melted by the high temperature gas coming into contact therewith. As a result, the coolant inside the pipe 142 may flow out to the outside, that is, the vent path, through the melted portion of the pipe 142.

The coolant 144 may be formed of a fluid that can flow inside the pipe 142. There is no particular limitation on the type of coolant 144, and it may be formed of a type of fluid suitable for performing a cooling function. For example, the coolant 144 may be, but is not limited thereto, the same material as the coolant used in a device or apparatus (e.g., a vehicle) in which the battery pack 100 is installed. The coolant 144 may be, for example, cooling water, ammonia, or a synthetic coolant such as a chlorofluorocarbon (CFC), a hydrofluorocarbon (HFC), etc.

As described above, when the pipe 142 is melted by the gas discharged from the cell vent 122, the coolant 144 may flow out of the pipe 142, that is, into the vent path. Then, the out-flowing coolant 144 may vaporize in the high temperature gas and/or flame environment within the vent path. As a result, the coolant 144 absorbs heat from the high temperature gas and/or flames as it vaporizes, thereby lowering the temperature of the high temperature gas and/or flames. By lowering the temperature of the high temperature gas and/or flames, thermal failure, such as melting of the internal structure of the battery pack 100, may be suppressed. Additionally, since the vaporization of the coolant 144 increases the pressure within the vent path, the high temperature gas and/or flames may be discharged more quickly through the pack vent 118 to the outside of the housing 110.

Also, among the coolant 144 flowing out of the pipe 142, the coolant 144, which has not vaporized, may mix with the active material ejected from the battery cell 120 in which thermal runaway has occurred. Also, since the active material mixed with the coolant 144 has a lower viscosity, it does not stick to the inside of the vent path or the pack vent 118 and may be discharged to the outside of the pack vent 118. Therefore, the increase in the size of the pack vent 118, particularly the height, due to the need to discharge the active material may be minimized, that is, it is not required to provide the pack vent 118 with a large size (particularly height) in order to allow discharge of the active material, thereby suppressing an increase in the height of the battery pack 100 due to the pack vent 118.

In one embodiment of the present disclosure, the coolant 144 may include one or more of water and ethylene glycol. For example, the coolant 144 may be a mixture of water and ethylene glycol. When vaporized, water and ethylene glycol provide more oxidizer, i.e. oxygen, which increases the oxygen/fuel ratio (O/F ratio) and breaks the stoichiometric conditions of the chemical reaction. Under such conditions, even when flames occur, the maximum adiabatic flame temperature is lower. Therefore, the heat generation inside the battery pack 100 may be suppressed, thereby preventing the thermal runaway from spreading to the adjacent battery cell 120.

Referring to FIGS. 1 to 5, the battery pack 100 may further include the support member 150 for supporting the plurality of battery cells 120. The support member 150 may be disposed between the first plate 111 and the battery cell 120 to support the plurality of battery cells 120 from the first plate 111 of the housing 110. For example, the support member 150 may support the plurality of battery cells 120 by being disposed between the cooling member 140 and the first plate 111 to support the cooling member 140. Accordingly, the support member 150 may prevent the cooling member 140 from being in direct contact with the housing 110.

The support member 150 has no special restrictions with respect to a material, size, shape, etc thereof. For example, the support member 150 may have the same size and shape as the cooling member 140 and may be configured to support the entire lower surface of the cooling member 140. Alternatively, the support member 150 may include a plurality of members that are relatively smaller than the cooling member 140, as illustrated in FIGS. 2 or 4, and the plurality of support members 150 positioned spaced apart from each other may be configured to support the cooling member 140 at a plurality of locations.

According to one embodiment of the present disclosure, a cooling member including a coolant is disposed in contact with a vent path and formed so that the cooling member ruptures when thermal runaway occurs. Accordingly, not only does the coolant vaporize to lower the temperature within the vent path, but the vent path also becomes a high-pressure environment, which effectively allows hot gas, or the like, to be exhausted through a pack vent, thereby suppressing thermal runaway from spreading to other battery cells. Additionally, an active material of an exploded battery cell can be mixed with the coolant to prevent the active material from clumping or sticking together and blocking the vent path and/or the pack vent.

However, the effects obtainable through the present disclosure are not limited to the effects described herein, and other technical effects that are not described will be clearly understood by those skilled in the art from the description of the disclosure described herein.

Although the present disclosure has been described with reference to embodiments shown in the drawings, these embodiments are merely examples, and it should be understood by those skill in the art that various modifications and equivalents are possible.

Therefore, the technical protection scope of the present disclosure should be determined by the patent claims herein.

## Claims

1. A battery pack comprising:
a housing having a pack vent;
a plurality of battery cells accommodated within the housing and arranged side by side such that respective cell vents thereof are directed in the same direction;
a vent path communicating with the pack vent and the cell vent of each of the plurality of battery cells as an empty space between the plurality of battery cells and the housing; and
a cooling member including a pipe disposed in contact with the plurality of battery cells and the vent path within the housing and at least partially formed of a material to be melted by gas discharged from the cell vent.

2. The battery pack of claim 1, wherein the cooling member further includes a coolant configured to flow inside the pipe.

3. The battery pack of claim 1 or 2, wherein at least a portion of the pipe, which is in contact with the vent path, is formed of a material having a melting point ranging from 100 to 700 °C.

4. The battery pack of claim 3, wherein the material includes one or more of a polymer resin and aluminum.

5. The battery pack of claim 3 or 4, wherein the pipe is formed entirely of a material with a melting point ranging from 100 to 700 °C.

6. The battery pack of claim 2 or any claim dependent on claim 2, wherein the coolant includes one or more of water and ethylene glycol.

7. The battery pack of any preceding claim, wherein the respective cell vents of the plurality of battery cells are provided on lower surfaces of the plurality of battery cells, respectively, each of the plurality of battery cells is a prismatic battery cell, and an electrode terminal of each of battery cell of the plurality battery cells is provided on an upper surface or a side surface of the each battery cell.

8. A battery pack according to any one of claims 1 to 7, wherein
the plurality of battery cells comprises a plurality of prismatic battery cells each having a cell vent provided on a lower surface thereof, and
the cooling member is disposed in contact with the lower surface of each of the plurality of prismatic battery cells.

9. The battery pack of claim 8, wherein the cell vent is provided in a central portion of the lower surface of each of the plurality of prismatic battery cells, and the cooling member is disposed in contact with both side portions of the lower surface of each of the plurality of prismatic battery cells.

10. The battery pack of claim 8 or 9, wherein the vent path communicates with the pack vent and the cell vent of each of the plurality of battery cells as an empty space between the plurality of prismatic battery cells and a first plate of the housing.

11. The battery pack of claim 10, further comprising a support member that is disposed on an upper side of the first plate of the housing and supports the plurality of prismatic battery cells upwardly.

12. The battery pack of claim 11, wherein the support member is disposed on a lower side of the cooling member to support the cooling member upwardly.
